(19) Europäisches Patentamt — European Patent Office — Office européen des brevets

(11) **EP 3 698 101 B1**

(12) **EUROPEAN PATENT SPECIFICATION**

(45) Date of publication and mention of the grant of the patent:
**08.09.2021 Bulletin 2021/36**

(21) Application number: **18796777.3**

(22) Date of filing: **19.10.2018**

(51) Int Cl.:
**G01B 9/02** $^{(2006.01)}$

(86) International application number:
**PCT/IB2018/058125**

(87) International publication number:
**WO 2019/077557 (25.04.2019 Gazette 2019/17)**

(54) **METHODS, COMPUTER PROGRAM PRODUCTS, AND RELATED SYSTEMS FOR MEASURING THERMO-ELASTIC DEFORMATIONS OF AN OBJECT**

VERFAHREN, COMPUTERPROGRAMMPRODUKTE, UND ZUGEHÖRIGE SYSTEME ZUR MESSUNG THERMOELASTISCHER VERFORMUNGEN EINES OBJEKTS

PROCÉDÉS, PRODUITS PROGRAMMES D'ORDINATEUR, ET SYSTÈMES ASSOCIÉS DE MESURE DE DÉFORMATIONS THERMO-ÉLASTIQUES D'UN OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2017 IT 201700118624**

(43) Date of publication of application:
**26.08.2020 Bulletin 2020/35**

(73) Proprietor: **Thales Alenia Space Italia S.p.A. Con Unico Socio**
**00131 Roma (IT)**

(72) Inventor: **COSENTINO, Gabriele Vito**
**00131 Roma (IT)**

(74) Representative: **Sordini, Lorenzo et al**
**Studio Torta S.p.A.**
**Via Viotti, 9**
**10121 Torino (IT)**

(56) References cited:
**KR-B1- 100 808 274      US-B2- 9 109 898**

• **ZHANG Y ET AL: "Patterned bilayer plate microstructures subjected to thermal loading: Deformation and stresses", INTERNATIONAL JOURNAL OF SOLIDS AND STRUCTURES, NEW YORK, NY, US, vol. 46, no. 1, 1 January 2009 (2009-01-01), pages 125-134, XP025629893, ISSN: 0020-7683, DOI: 10.1016/J.IJSOLSTR.2008.08.020 [retrieved on 2008-08-28]**

## Description

## TECHNICAL FIELD OF THE INVENTION

The present invention relates, in general, to interferometric metrology applied to thermo-structural investigations to evaluate thermo-elastic behavior of objects under test (e.g., in comparison with Finite Element Method (FEM) predictions). More particularly, the present invention concerns innovative methods, computer program products, and a related system for measuring thermo-elastic deformations of an object under test, such as a device, system, apparatus, equipment (e.g., a satellite), or one or more parts thereof.

## STATE OF THE ART

As is known, in aerospace sector it may be required to evaluate thermo-elastic behavior, in flight/orbit conditions, of devices, systems, apparatus, equipment (e.g., antenna optics), or parts thereof, designed to be installed on board aircraft/spacecraft/satellites and to operate in severe thermal conditions. This evaluation provides information useful for predicting and checking thermo-elastic behavior of said devices/systems/apparatus/equipment during their respective mission, and also for designing devices/systems/apparatus/equipment of the same type for future missions.

In particular, it is sometimes required to test devices/systems/apparatus/equipment (hereinafter referred to as "object(s) under test" - OUT(s)) in very severe/extreme environmental conditions (e.g., at very high temperatures), in which existing measurement technologies are unable to operate.

With specific reference to thermal test conditions, current commercial measurement systems (e.g., photogrammetry systems) typically allows to measure thermo-elastic deformations of an OUT only up to a maximum temperature of 100°C. Thence, if investigations at higher temperatures are required, only numerical FEM simulations and predictions are carried out, thereby being impossible to acquire important information about the real thermo-elastic behavior of an OUT at temperatures higher than 100°C.

Alternatively, test requirements may be relaxed so as to meet measurement systems' technical specifications. In particular, the use of photogrammetry systems for measuring thermo-elastic deformations of an OUT up to a maximum temperature of 100°C is currently known.

Generally, a typical photogrammetry system, in use, performs measurements of reflective targets applied to an OUT from many points of observation arranged all around the OUT.

In case of measurements inside thermal chambers, a photogrammetry system must be installed inside a special canister to be protected from surrounding environment.

Generally, photogrammetry systems allow to test thermo-elastic behavior of OUTs with high accuracy. Nevertheless, these systems require the use of special equipment (e.g., motorized or supporting arms) and considerable modifications to test facilities, thereby having a big impact on overall test times and costs. Moreover, as previously explained, the feasibility of tests based on the use of photogrammetry systems is guaranteed only if test temperatures are lower than 100°C and if it is possible to fix reflective targets on the OUT.

A different solution is disclosed in US 9,109,898 B2, which relates to a laser radar through the window (LRTW) coordinate correction method.

In general, US 9,109,898 B2 describes a method for corrections of metrology instruments measurements of positions of points of interest measured by beams of radiation propagating through stratified media, wherein said method comprises:

- providing a metrology instrument, a point of interest and a stratified medium, wherein said stratified medium has a portion arranged in between and separating the metrology instrument and the point of interest;
- performing ray-tracing of a ray launched from the metrology instrument in a direction of an apparent position of the point of interest through the portion of the stratified medium;
- determining a direction of propagation of said ray;
- measuring an apparent total geometric length from the metrology instrument to the apparent position of the point of interest along the ray;
- computing a path length of the ray through the portion of the stratified medium using optical properties of the stratified medium, the direction of propagation of the ray and the apparent total geometric length; and
- determining coordinates of true position of the point of interest using the path length and the direction of propagation of the ray.

More specifically, US 9,109,898 B2 teaches to determine coordinates or relative positions of predetermined points of interest by using a laser radar or a laser tracker and by performing measurements by means of said laser radar/tracker through a glass window of a vacuum chamber or vehicle (e.g., a satellite, aircraft, spacecraft, rocket, etc.).

According to US 9,109,898 B2, the measurements are corrected in post-processing to take account of effects due to laser light propagation through the glass window. In particular, correction of the measurements is based on computation of refractive indexes of the glass window on the basis of a predefined temperature- and wavelength-dependent mathematical model and of predefined coefficients, wherein both said predefined mathematical model and coefficients specifically depends on the material which said glass window is made of.

Thence, an a priori knowledge of the material which the glass window is made of, and of optical and physical features thereof, is necessary in order for the method according to US 9,109,898 B2 to be carried out.

Additionally, according to US 9,109,898 B2, the laserradar-through-the-window coordinate correction could also be used "in reverse" to calculate apparent point of interest locations for laser radar measurements made through the window given the blueprint or nominal values of those targets. In particular, in this respect, US 9,109,898 B2 teaches to:

i) perform ray-tracing to determine at least one direction of propagation of at least one ray through the window;

ii) calculate at least one path length of the at least one ray through the window;

iii) determine coordinates of a current calculated point of interest position using the at least one path length and the at least one direction of propagation of the at least one ray;

iv) determine at least one merit function value by comparing separation of the current calculated point of interest position and the true point of interest position; and

v) compare the at least one merit function value and at least one predetermined optimization parameter such that:

- if the at least one predetermined optimization parameter substantially exceeds the at least one merit function value, the coordinates of the current calculated point of interest position are found to represent the coordinates of an apparent point of interest position corresponding to the true point of interest position of the at least one point of interest; whereas,
- if the at least one predetermined optimization parameter does not substantially exceed the at least one merit function value, a choice point of interest position is updated and the steps d)-h) repeated in sequence.

In other words, US 9,109,898 B2 taches to iteratively perform optical measurements of an object until a predetermined optimization parameter substantially exceeds a merit function value determined by comparing separation of a current measured point of interest position and a true point of interest position. Namely, US 9,109,898 B2 teaches to use the above iterative methodology i)-v) to cause the currently measured point of interest position to iteratively converge toward the true point of interest position.

The solution according to US 9,109,898 B2, if applied to OUTs' thermo-elastic behavior tests, might extend test temperature range, thereby overcoming the above limits of photogrammetry systems.

On the other hand, the solution according to US 9,109,898 B2 is based on a fixed, rigid correction algorithm that must be defined a priori for each specific test setup on the basis of known optical and physical features of the material which the glass window is made of.

Thence, this solution is not versatile since it is applicable only to test facilities with known optical and physical characteristics of the glass window.

A further example of methodology for assessing deformations of structures (in particular, for measuring and analyzing thermo-elastic deformation behavior of patterned plate microstructures fabricated by surface micromachining) is provided in the paper by Zhang Y. et al. entitled "Patterned bilayer plate microstructures subjected to thermal loading: Deformation and stresses", International Journal of Solids and Structures, New York, NY, US, vol. 46, No. 1, 1 January 2009, pages 125-134. In detail, the methodology described in this paper includes:

- providing a custom-built temperature chamber with optical access;
- arranging patterned bilayer plate microstructures in the temperature chamber;
- heating the chamber above 100°C holding this temperature for approximately 3.5 minutes;
- cooling the chamber's temperature at a rate of 10°C/min from 100°C to room temperature;
- performing scanning white light interferometry measurements of the patterned bilayer plate microstructures at 100°C and during cooling; and
- analyzing thermo-elastic deformations of the patterned bilayer plate microstructures by comparing the interferometry measurements with predictions provided by a deformation response model based on geometrically nonlinear plate theory and finite element method.

The document KR 100 808 274 B1 relates to measurements by ellipsometry. The sample is placed in a chamber with a window.

## OBJECT AND SUMMARY OF THE INVENTION

A general object of the present invention is that of providing a methodology for measuring thermo-elastic deformations of an object under test (OUT), which methodology overcomes the above technical drawbacks of the existing solutions.

Moreover, a specific object of the present invention is that of providing a methodology for measuring thermo-elastic deformations of an OUT, which methodology:

- is based on the use of an interferometric metrology instrument (such as a laser radar/tracker), and of a thermal chamber (or thermal vacuum chamber) fitted with an inspection window; and
- does not require any a priori knowledge of the material which the inspection window is made of, and of optical and physical features thereof.

These and other objects are achieved by the independent method claims 1 and 4, the independent apparatus claims 7 and 10, and the independent computer program product claims 13 and 14. The dependent claims further develop the idea of the present invention.

## BRIEF DESCRIPTION OF THE DRAWINGS

For a better understanding of the present invention, preferred embodiments, which are intended purely by way of non-limiting examples, will now be described with reference to the attached drawings (all not to scale), where:

- Figure 1 shows an example of measurement setup exploitable to carry out the present invention;
- Figure 2 shows an example of laser beam deviation due to refraction;
- Figure 3 shows an example of reference axes exploitable by a laser radar to provide measurements expressed in terms of azimuth and elevation;
- Figure 4 shows an example of spherical coordinate system related to a measurement performed by a laser radar;
- Figure 5 shows an example of calibration reference template exploitable to carry out a preliminary calibration step according to the present invention; and
- Figures 6, 7 and 8 show examples of compensation functions computable according to the present invention.

## DETAILED DESCRIPTION OF PREFERRED EMBODIMENTS OF THE INVENTION

The following description is presented to enable a person skilled in the art to make and use the invention. Various modifications to the embodiments will be readily apparent to those skilled in the art, without departing from the scope of the present invention as claimed. Thence, the present invention is not intended to be limited to the embodiments shown and described, but is to be accorded the widest scope consistent with the principles and features disclosed herein and defined in the appended claims.

The present invention concerns methods for measuring thermo-elastic deformations (or distortions) of an object under test (OUT), such as a device, system, apparatus, equipment (e.g., a satellite), or one or more parts thereof (e.g., antenna optics).

In particular, both a first and a second method for measuring thermo-elastic deformations of objects according to, respectively, a first and a second aspect of the present invention include providing:

- an interferometric metrology instrument (preferably, a laser radar or a laser tracker) operable to carry out optical measurements; and
- a thermal chamber (or thermal vacuum chamber), whose internal temperature is controllable and which is fitted with an inspection window closed by a medium (e.g., a window glass) transparent to light emitted by the interferometric metrology instrument; wherein said interferometric metrology instrument is arranged outside the thermal chamber in front of the inspection window, thereby being operable to carry out optical measurements through said inspection window.

Additionally, the first method according to the first aspect of the present invention further includes:

- arranging an object to be tested inside the thermal chamber;
- operating the thermal chamber to expose the object to one or more predefined test temperatures;
- operating the interferometric metrology instrument to carry out, through the inspection window, optical measurements of the object exposed to the predefined test temperature(s);
- correcting the optical measurements to compensate for propagation through the medium of the light emitted by the interferometric metrology instrument; and
- detecting and measuring thermo-elastic deformations of the object based on the corrected optical measurements.

Instead, the second method according to the second aspect of the present invention further includes:

- arranging an object to be tested inside the thermal chamber;
- computing a set of object's points to be measured, wherein said set of object's points is computed based on a Finite Element Model (FEM) simulation of thermo-elastic behavior of the object;
- modifying the computed set of object's points to compensate for propagation through the medium of the light emitted by the interferometric metrology instrument;
- operating the thermal chamber to expose, to one or more predefined test temperatures, the object arranged inside the thermal chamber;
- operating the interferometric metrology instrument based on the modified set of object's points to carry out, through the inspection window, optical measurements of the object exposed to the predefined test temperature(s); and
- detecting and measuring thermo-elastic deformations of the object based on the optical measurements carried out.

Additionally, both the first and second methods according to the present invention include a preliminary calibration step, which comprises:

- carrying out, by means of the interferometric metrology instrument, calibration measurements of an object to be tested, or of a calibration reference template, arranged inside the thermal chamber, wherein the calibration measurements comprise

- one or more first calibration measurements of the object, or of the calibration reference template, carried out by the interferometric metrology instrument through the inspection window closed by the medium, and
- one or more second calibration measurements of the object, or of the calibration reference template, carried out by the interferometric metrology instrument through the inspection window without the medium; and

• determining, based on the calibration measurements, refraction and phase shift compensation laws related to propagation through the medium of the light emitted by the interferometric metrology instrument.

According to the first aspect of the present invention, the optical measurements of an OUT are corrected based on the refraction and phase shift compensation laws to perform a "direct" compensation for propagation through the medium of the light emitted by the interferometric metrology instrument.

Instead, according to the second aspect of the present invention, the set of object's points to be measured (computed based on FEM simulation of thermo-elastic behavior of an OUT) are modified based on the refraction and phase shift compensation laws to perform a "reverse" compensation for propagation through the medium of the light emitted by the interferometric metrology instrument.

Preferably, the interferometric metrology instrument is configured to operate in the infrared (IR) band.

Moreover, the present invention relates also to a system for measuring thermo-elastic deformations of objects.

In particular, the system according to the present invention includes:

• an interferometric metrology instrument (preferably, a laser radar or a laser tracker) operable to carry out optical measurements (preferably, in the IR band);
• a thermal chamber (or thermal vacuum chamber), whose internal temperature is controllable and which is fitted with an inspection window closed by a medium (e.g., a window glass) transparent to light emitted by the interferometric metrology instrument; wherein said interferometric metrology instrument is arranged outside the thermal chamber in front of the inspection window, thereby being operable to carry out optical measurements through said inspection window; and
• a control and processing unit, that is connected (in wired and/or wireless fashion) to said interferometric metrology instrument and said thermal chamber to control operation thereof (e.g., by exchanging data therewith and sending commands thereto), and that is configured (in particular, programmed) to cause the system (i.e., the interferometric metrology instrument, the thermal chamber and said control and processing unit itself) to carry out the first method according to the first aspect of the present invention and/or the second method according to the second aspect of the present invention.

According to both the first and second aspects of the present invention, the optical measurements of the object are conveniently expressed in terms of radius, azimuth and elevation. In this case, the preliminary calibration step conveniently includes also:

• providing

- a first predefined mathematical function related to refraction compensation in azimuth via azimuth refraction corrective parameters,
- a second predefined mathematical function related to refraction compensation in elevation via elevation refraction corrective parameters, and
- a third predefined mathematical function related to phase shift compensation via phase shift corrective parameters;

• computing values of the azimuth refraction corrective parameters, the elevation refraction corrective parameters and the phase shift corrective parameters based on the calibration measurements and on said first, second and third predefined mathematical functions; and
• applying the computed values of the azimuth refraction corrective parameters, the elevation refraction corrective parameters and the phase shift corrective parameters into said first, second and third predefined mathematical functions, thereby determining an azimuth refraction compensation law, an elevation refraction compensation law and a phase shift compensation law, respectively.

Thence, according to the first aspect of the present invention, the optical measurements of an OUT are corrected based on said azimuth refraction compensation law, said elevation refraction compensation law and said phase shift compensation law to perform the direct compensation for propagation through the medium of the light emitted by the interferometric metrology instrument.

Instead, according to the second aspect of the present invention, the set of object's points to be measured (computed based on FEM simulation of thermo-elastic behavior of the OUT) are modified based on said azimuth refraction compensation law, said elevation refraction compensation law and said phase shift compensation law to perform the reverse compensation for propagation through the medium of the light emitted by the interferometric metrology instrument.

In the following, a methodology for compensating for propagation through the medium of the light emitted by the interferometric metrology instrument (hereinafter referred to as "Adaptive Compensation Algorithm" - ACA) according to a preferred embodiment of the present invention will be described in detail.

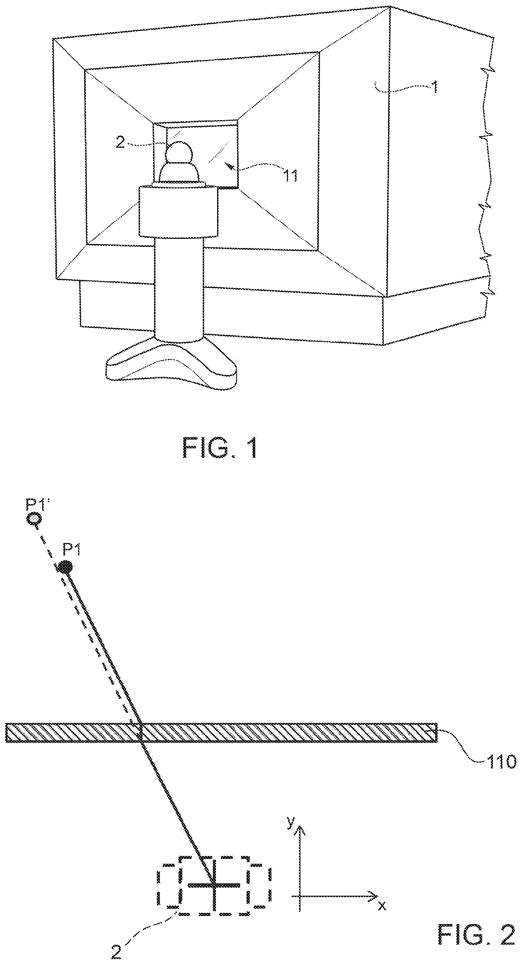

For a better understanding of said ACA, reference is made to Figure 1 that shows an example of measurement setup exploitable to carry out the method according to the present invention.

In particular, Figure 1 shows:

- a thermal vacuum chamber 1 fitted with an inspection window 11 closed by a window glass; and
- a laser radar 2 arranged outside the thermal vacuum chamber 1 in front of the inspection window 11 for performing, through said inspection window 11 (and, hence, through said window glass), optical measurements of an OUT arranged inside the thermal vacuum chamber 1.

Due to the presence of the window glass, laser beam is subject to deviation due to two main contributions, namely a refraction contribution and a phase shift contribution.

Both contributions modify distances measured by the laser radar 2, thereby resulting in optical measurements that do not represent real position and size of the OUT.

Each contribution, based on its own nature, induces respective effects on the measurements performed by the laser radar 2.

In particular, refraction induces a deviation of the laser beam that linearly depends on the angle of incidence of the beam itself on the window glass.

In this connection, Figure 2 shows an example of laser beam deviation due to refraction, on the assumption that the window glass (denoted by 110 in Figure 2) is made up of a single glass sheet.

In particular, as shown in Figure 2, the laser radar 2, due to laser beam deviation induced, by refraction, by the window glass 110, locates a point P1 of an OUT at an apparent position P1'.

Since refraction contribution depends on the angle of incidence of the laser beam on the window glass 110, global deviation is related to reference axes used by the laser radar 2 to perform measurements.

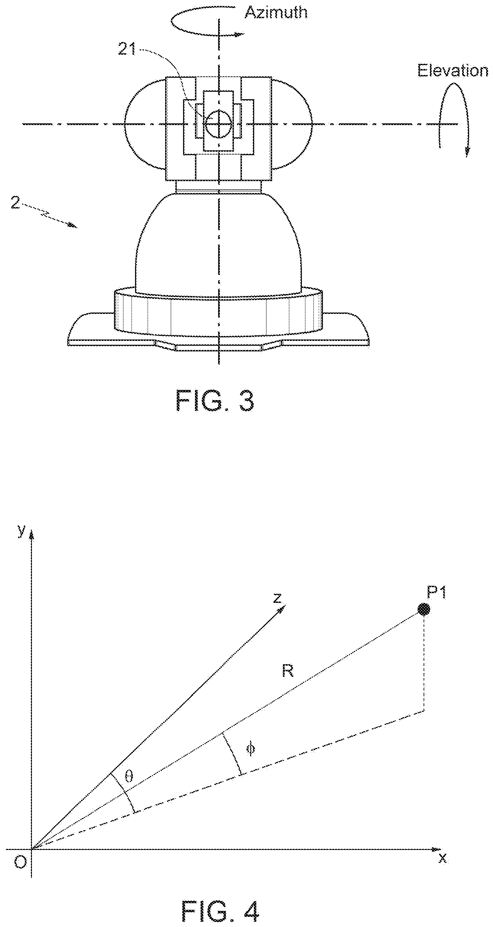

In this connection, Figure 3 shows an example of reference axes exploitable by the laser radar 2, whereby measurements are expressed in terms of azimuth and elevation. In particular, Figure 3 shows two orthogonal reference axes centered on a laser source (denoted by 21) of the laser radar 2, wherein the measurements performed by said laser radar 2 are expressed in terms of azimuth and elevation angles defined with respect to said orthogonal reference axes.

Based on the above assumptions, refraction can be generally compensated by a function of the first order for each reference axis of the laser radar 2.

In particular, general functions for refraction compensation of a generic point $P_n$ measurement are:

$$d\theta_n = A \cdot \theta_n + B \qquad (1)$$

$$d\varphi_n = C \cdot \varphi_n + D \qquad (2)$$

where $d\theta_n$ denotes deviation of azimuth angle with respect to the same measurement performed without the window glass 110, $\theta_n$ denotes azimuth angle of the point $P_n$ with respect to the laser radar 2, $A$ and $B$ denote azimuth corrective parameters depending on optical performance of the window glass 110, $d\varphi_n$ denotes deviation of elevation angle with respect to the same measurement performed without the window glass 110, $\varphi_n$ denotes elevation angle of the point $P_n$ with respect to the laser radar 2, $C$ and $D$ denote elevation corrective parameters depending on the optical performance of the window glass 110.

In particular, the parameters $A$, $B$, $C$ and $D$ are constants depending on the optical performance (i.e., optical features) of the window glass 110.

The second deviation contribution is represented by phase shift due to change of propagation medium that corresponds to a modification in depth of point measured. This phenomenon can be described by a function of the second order depending on the dielectric constant of the window glass 110, on laser wavelength and on length of laser path through said window glass 110.

In particular, if the laser beam were perfectly orthogonal to the window glass 110, the length of the laser path would correspond exactly to thickness of said window glass 110.

More in general, the length of the laser path through the window glass 110 depends on the angle of incidence of the laser beam on said window glass 110, and increases as the angle of incidence increases.

This consideration implies that the length of the laser path through the window glass 110 can be expressed as a function of a pointing angle of the laser radar 2, wherein said pointing angle is an overall angle resulting from the azimuth and elevation angles.

The pointing angle can be better understood and described using spherical coordinates, whereby point position in space is expressed in terms of azimuth, elevation and radius.

In this connection, Figure 4 shows the point P1 in a spherical coordinate system whose origin O coincides with origin of the reference system of the laser radar 2 (i.e., with the laser source 21).

Therefore, in view of the foregoing, also the following general function for phase shift compensation can be defined:

$$dL = E \cdot \gamma^2 + F \cdot \gamma + G \qquad (3)$$

where $dL$ denotes variation of the length of the laser path through the window glass 110, $\gamma$ denotes pointing angle of the laser radar 2, and $E$, $F$ and $G$ denote pointing angle corrective parameters depending on the optical performance of the window glass 110.

In order for the corrective parameters $A$, $B$, $C$, $D$, $E$, $F$ and $G$ to be determined by the ACA, a preliminary calibration step is carried out, which includes, once position of the laser radar 2 has been fixed, carrying out calibration measurements of either the OUT, or a calibration reference template (CRT) arranged in the thermal vacuum chamber 1 and specifically shaped for calibration purposes, wherein the calibration measurements include at least a first calibration measurement performed through the inspection window 11 closed by the window glass 110, and at least a second calibration measurement performed through the inspection window 11 without the window glass 110 (i.e., after having removed said window glass 110 from the inspection window 11).

In other words, during the preliminary calibration step, points of either the OUT, or a CRT, are measured with and without the window glass 110.

Preferably, the CRT's size is as comparable as possible to OUT's size in order to obtain an exhaustive characterization of refraction effects. In fact, the more the CRT's size is comparable to the OUT's size, the more accurate the compensation is, since the corrective parameters $A$, $B$, $C$, $D$, $E$, $F$ and $G$ are defined for the whole measuring range of the laser radar 2.

Moreover, the CRT may be conveniently made of a material having a low coefficient of thermal expansion.

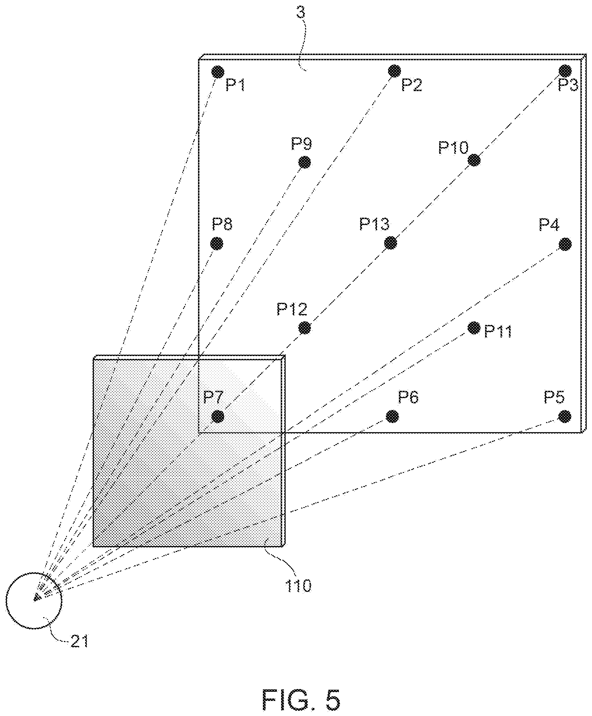

Figure 5 shows an example of CRT (denoted by 3) having substantially a rectangular parallelepiped shape. A plurality of reference points (or targets) P1,P2,...,P13 are arranged on the CRT 3. During the preliminary calibration step, said reference points P1,P2, ..., P13 are measured by the laser radar 2 (in particular, in Figure 5 the laser source 21 is shown) through the inspection window 11 with and without the window glass 110 (Figure 5 showing only the example of a first calibration measurement performed through the inspection window 11 closed by the window glass 110).

Conveniently, the reference points P1,P2,...,P13 are positioned on the CRT 3 following a predefined radial distribution on plane and a predefined spacing in depth so as to determine deviations of measurements on plane and in depth.

Points acquired by the laser radar 2 by means of the first and second calibration measurements are processed by using an interpolation technique to determine the corrective parameters $A$, $B$, $C$, $D$, $E$, $F$ and $G$.

Then, said corrective parameters $A$, $B$, $C$, $D$, $E$, $F$ and $G$ are applied to the general functions (1), (2) and (3) to define compensation laws for the specific measurement setup in use.

Conveniently, several calibrations measurements with the window glass 110 and several calibration measurements without the window glass 110 are performed in order to increase accuracy of interpolation and, hence, confidence in the corrective parameters $A$, $B$, $C$, $D$, $E$, $F$ and $G$.

Once said corrective parameters $A$, $B$, $C$, $D$, $E$, $F$ and $G$ and, hence, compensation functions are defined, it is possible to compensate the optical measurements of an OUT, thereby obtaining exact geometry thereof.

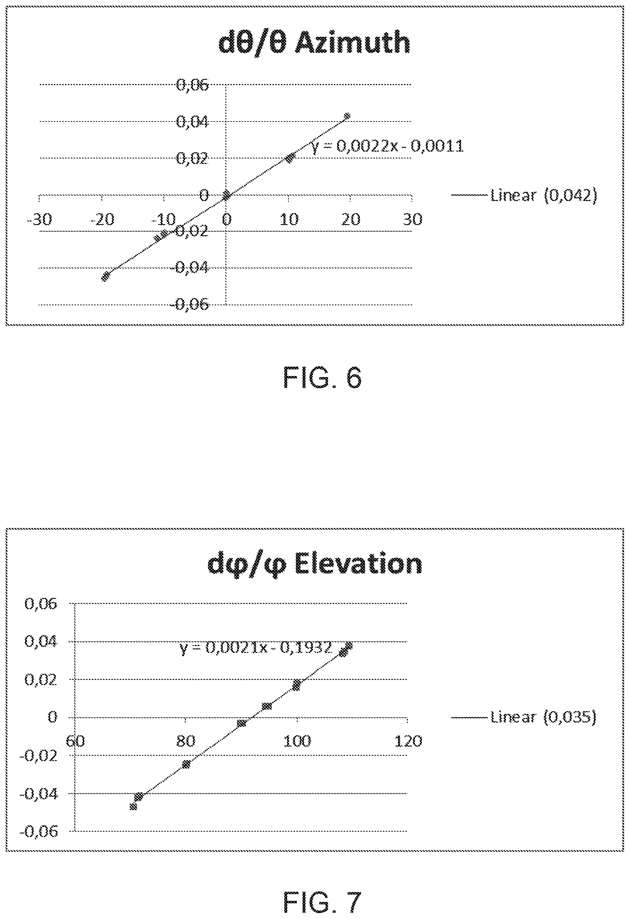

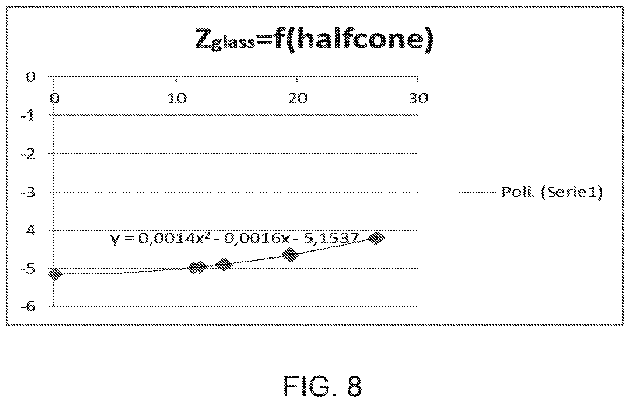

In this connection, Figures 6, 7 and 8 show examples of three compensation functions respectively related to azimuth, elevation and pointing angles. In view of the foregoing, the two compensation functions shown in Figures 6 and 7 and related to azimuth and elevation angles are related to refraction compensation, while the compensation function shown in Figure 8 and related to pointing angle is related to phase shift compensation.

Therefore, in view of the foregoing, the ACA, along with the preliminary calibration step, allows to "know", very quickly, physical and optical properties of the measurement setup (and, in particular, of the window glass 110) and to define, for the specific measurement setup in use, respective compensation laws to correct laser beam deviations introduced by the medium of the inspection window. In this way, the present invention is quickly adaptable to any test setup and thermal facility. In fact, the ACA allows to quickly compute the compensation laws and, then, proceed with tests.

Alternatively, it is possible to proceed with distortion measurements according to the second aspect of the present invention. In particular, in this case, a set of points of the OUT is preliminary computed based on a FEM prediction/simulation of the thermo-elastic behavior of the OUT. Then, said set of points of the OUT (in the following referred to also as "input point cloud") is modified by an ACA-based reverse compensation, and the laser radar 2 is operated to carry out optical measurements of the OUT based on the modified set of points.

Thanks to the ACA-based reverse compensation, the point cloud is modified so as to become coherent with the OUT's geometry inside the thermal vacuum chamber 1 after beam distortion induced by the window glass 110.

Conveniently, for surface measurements in "contactless mode" (i.e., with no (reflective) target applied on the OUT), the input point cloud corresponds to nodes of a FEM mesh computed for each test case. Also in this case, the input point cloud is conveniently modified by using the ACA in reverse mode in order to cause the FEM mesh (i.e., the input point cloud) to become coherent with the surface inside the thermal vacuum chamber 1 after beam distortion induced by the window glass 110.

More in general, the ACA may be advantageously exploited in a double mode, namely a direct mode and a reverse mode.

As for the direct mode, optical measurements of an OUT arranged inside a thermal chamber are carried out by means of an interferometric metrology instrument and, then, the optical measurements are corrected based on refraction and phase shift compensation laws computed by the ACA based on calibration measurements. In this way, it is possible to obtain the real geometry of the OUT by removing refraction and phase shift contributions.

Instead, as for the reverse mode, a set of point to be measured is computed based on a FEM prediction/simulation of the thermo-elastic behavior of the OUT. Then, said set of points is modified based on refraction and phase shift compensation laws computed by the ACA based on calibration measurements in order to take account of refraction and phase shift effects. In particular, via the ACA-based reverse compensation, refraction and phase shift contributions are added to the set of points computed based on FEM prediction/simulation. Then, the modified set of points is provided as input to the interferometric metrology instrument to carry out coherent optical measurements of the OUT inside the thermal chamber.

The reverse mode is particularly advantageous for contactless measurements (i.e., with no (reflective) target applied on the OUT). In fact, in this case, it is possible to input, into the interferometric metrology instrument, a FEM mesh compensated by the ACA-based reverse compensation, so that the measurement point mesh projected onto the OUT inside the thermal chamber is coherent with the point mesh generated by FEM simulation.

In view of the foregoing, technical advantages of the present invention are immediately clear to those skilled in the art.

In particular, it is worth noting that the present invention overcomes all the technical drawbacks of the existing solutions, thereby representing a step ahead in terms of versatility and cost saving.

In fact, the present invention allows to extend test temperature range and to perform contactless optical measurements under severe/critical test conditions, since the interferometric metrology instrument is arranged outside the thermal chamber (i.e., outside the test environment) and, hence, is not exposed to test conditions. This allows using commercial interferometric metrology systems without any limitation as for operating temperature. More importantly, this allows extending test temperature range to entire operating capability of thermal chambers (or thermal vacuum chambers), thereby overcoming temperature limitations of current commercial solutions.

It is worth also noting that the present invention, when implemented by means of a laser radar, does not require any reference (in particular, reflective) target applied on the OUTs. Instead, in case of use of laser trackers, points to be measured are conveniently materialized on the OUT with standard reflectors.

As previously explained, the ACA allows evaluating optical features of the measurement setup and of the inspection window by preliminary calibration measurements, based on which compensation laws are specifically defined for the measurement setup in use.

In other words, the ACA algorithm provides the capability to "learn" physical and optical features of the measurement setup in use just before starting thermo-elastic distortion tests, without any additional cost. Therefore, the present invention can be used in all test facilities with any window glass typology or shape.

Additional advantages of the present invention are:

- no need for investments in development of special devices/hardware;
- no need for test facilities modifications;
- capability to measure, in contactless mode, highly-sensitive or specially-coated surfaces (such as reflective surfaces) and, more in general, from small, simple objects up to big, very complex structures; and
- an overall reduction in test costs.

With specific reference to the aerospace sector, it is worth stressing the point that the present invention, which allows carrying out contactless optical measurements, enables performing thermo-structural investigations also of highly-sensitive items, like reflective surfaces (e.g., antenna optics).

Additionally, it is worth noting also that, according to currently known solutions (such as that disclosed in the aforesaid paper: *"Patterned bilayer plate microstructures subjected to thermal loading: Deformation and stresses")* FEM predictions are typically compared, in post-processing, to performed interferometry measurements to analyze thermo-elastic deformations of an object/structure. On the contrary, according to the ACA-based reverse compensation (namely, according to the second aspect of the present invention), the FEM simulation of the thermo-elastic behavior of the object under test is used to obtain actual points of the object under test to be measured by taking account of the refraction and phase shift compensation laws to compensate for propagation through the medium of the light emitted by the interferometric metrology instrument. In other words, according to the ACA-based reverse compensation (namely, according to the second aspect of the present invention), the FEM simulation is modified based on the refraction and phase shift compensation laws, thereby obtaining nodes of a FEM prediction mesh to be used as inputs to the interferometric metrology instrument so as to perform optical measurements of the actual points of interest. Thanks to this feature, it is possible to dramatically reduce thermal distortion evaluation time due to the fact that measured shape of test articles produced thanks to the algorithm makes a "real image" ready to be compared "one to one" (i.e., "mesh to mesh") to predictions of analysis.

In conclusion, it is clear that numerous modifications and variants can be made to the present embodiments, all falling within the scope of the invention, as defined in the appended claims.

**Claims**

1. Method for measuring thermo-elastic deformations of objects, including providing:

    • an interferometric metrology instrument (2) configured to carry out optical measurements; and
    • a thermal chamber (1), whose internal temperature is controllable and which is fitted with an inspection window (11) closed by a medium (110) that is transparent to light emitted by the interferometric metrology instrument (2) ;

    wherein said interferometric metrology instrument (2) is arranged outside the thermal chamber (1) in front of the inspection window (11), thereby being operable to carry out optical measurements through said inspection window (11);
    the method further including:

    • arranging an object to be tested inside the thermal chamber (1);
    • operating the thermal chamber (1) to expose the object to one or more predefined test temperatures;
    • operating the interferometric metrology instrument (2) to carry out, through the inspection window (11), optical measurements of the object exposed to the predefined test temperature or temperatures;
    • correcting the optical measurements to compensate for propagation through the medium (110) of the light emitted by the interferometric metrology instrument (2); and
    • detecting and measuring thermo-elastic deformations of the object based on the corrected optical measurements;

    the method being **characterized by** a preliminary calibration step including:

    • carrying out, by means of the interferometric metrology instrument (2), calibration measurements of the object, or of a calibration reference template (3), arranged inside the thermal chamber (1), wherein the calibration measurements comprise

    - at least a first calibration measurement of the object, or of the calibration reference template (3), carried out by the interferometric metrology instrument (2) through the inspection window (11) closed by the medium (110), and
    - at least a second calibration measurement of the object, or of the calibration reference template (3), carried out by the interferometric metrology instrument (2) through the inspection window (11) without the medium (110); and

    • determining, based on the calibration measurements, refraction and phase shift compensation laws related to propagation through the medium (110) of the light emitted by the interferometric metrology instrument (2);

    wherein the optical measurements are corrected based on the refraction and phase shift compensation laws.

2. The method of claim 1, wherein the optical measurements of the object are expressed in terms of radius, azimuth and elevation;
    and wherein the preliminary calibration step further includes:

    • providing

        - a first predefined mathematical function related to refraction compensation in azimuth via azimuth refraction corrective parameters,
        - a second predefined mathematical function related to refraction compensation in elevation via elevation refraction corrective parameters, and
        - a third predefined mathematical function related to phase shift compensation via phase shift corrective parameters;

    • computing values of the azimuth refraction corrective parameters, the elevation refraction corrective parameters and the phase shift corrective parameters based on the calibration measurements and on said first, second and third predefined mathematical functions; and
    • applying the computed values of the azimuth refraction corrective parameters, the elevation refraction corrective parameters and the phase shift corrective parameters into said first, second and third predefined mathematical functions, thereby determining an azimuth refraction compensation law, an elevation refraction compensation law and a phase shift compensation law, respectively.

3. The method according to claim 1 or 2, wherein the calibration measurements comprise:

   • a plurality of first calibration measurements of the object, or of the calibration reference template (3), carried out by the interferometric metrology instrument (2) through the inspection window (11) closed by the medium (110); and
   • a plurality of second calibration measurements of the object, or of the calibration reference template (3), carried out by the interferometric metrology instrument (2) through the inspection window (11) without the medium (110).

4. Method for measuring thermo-elastic deformations of objects, including providing:

   • an interferometric metrology instrument (2) configured to carry out optical measurements; and
   • a thermal chamber (1), whose internal temperature is controllable and which is fitted with an inspection window (11) closed by a medium (110) that is transparent to light emitted by the interferometric metrology instrument (2);

   wherein said interferometric metrology instrument (2) is arranged outside the thermal chamber (1) in front of the inspection window (11), thereby being operable to carry out optical measurements through said inspection window (11);
   the method further including a preliminary calibration step comprising:

   • carrying out, by means of the interferometric metrology instrument (2), calibration measurements of an object to be tested, or of a calibration reference template (3), arranged inside the thermal chamber (1), wherein the calibration measurements comprise

   - at least a first calibration measurement of the object, or of the calibration reference template (3), carried out by the interferometric metrology instrument (2) through the inspection window (11) closed by the medium (110), and
   - at least a second calibration measurement of the object, or of the calibration reference template (3), carried out by the interferometric metrology instrument (2) through the inspection window (11) without the medium (110); and

   • determining, based on the calibration measurements, refraction and phase shift compensation laws related to propagation through the medium (110) of the light emitted by the interferometric metrology instrument (2);

   the method further including:

   • computing a set of object's points to be measured, wherein said set of object's points is computed based on a finite element model simulation of thermo-elastic behavior of the object;
   • modifying the computed set of object's points based on the refraction and phase shift compensation laws to compensate for propagation through the medium (110) of the light emitted by the interferometric metrology instrument (2);
   • operating the thermal chamber (1) to expose, to one or more predefined test temperatures, the object arranged inside the thermal chamber (1);
   • operating the interferometric metrology instrument (2) based on the modified set of object's points to carry out, through the inspection window (11), optical measurements of the object exposed to the predefined test temperature or temperatures; and
   • detecting and measuring thermo-elastic deformations of the object based on the optical measurements carried out.

5. The method of claim 4, wherein the optical measurements of the object are expressed in terms of radius, azimuth and elevation;
   and wherein the preliminary calibration step further includes:

   • providing

   - a first predefined mathematical function related to refraction compensation in azimuth via azimuth refraction corrective parameters,
   - a second predefined mathematical function related to refraction compensation in elevation via elevation refraction corrective parameters, and
   - a third predefined mathematical function related to phase shift compensation via phase shift corrective parameters;

   • computing values of the azimuth refraction corrective parameters, the elevation refraction corrective parameters and the phase shift corrective parameters based on the calibration measurements and on said first, second and third predefined mathematical functions; and
   • applying the computed values of the azimuth refraction corrective parameters, the elevation refraction corrective parameters and the phase shift corrective parameters into said first, second and third predefined mathematical functions, thereby determining an azimuth refraction compensation law, an elevation refraction compensation law and a phase shift compensation law, respectively.

**6.** The method according to claim 4 or 5, wherein the calibration measurements comprise:

• a plurality of first calibration measurements of the object, or of the calibration reference template (3), carried out by the interferometric metrology instrument (2) through the inspection window (11) closed by the medium (110); and
• a plurality of second calibration measurements of the object, or of the calibration reference template (3), carried out by the interferometric metrology instrument (2) through the inspection window (11) without the medium (110) .

**7.** System for measuring thermo-elastic deformations of objects, including:

• an interferometric metrology instrument (2) configured to carry out optical measurements;
• a thermal chamber (1), whose internal temperature is controllable and which is fitted with an inspection window (11) closed by a medium (110) that is transparent to light emitted by the interferometric metrology instrument (2); and
• a control and processing unit connected to the interferometric metrology instrument (2) and the thermal chamber (1) to control operation thereof;

wherein the interferometric metrology instrument (2) is arranged outside the thermal chamber (1) in front of the inspection window (11), thereby being operable to carry out optical measurements through said inspection window (11);
and wherein the control and processing unit is configured to:

• operate the interferometric metrology instrument (2) to carry out calibration measurements of an object to be tested, or of a calibration reference template (3), arranged inside the thermal chamber (1), wherein the calibration measurements comprise

- at least a first calibration measurement of the object, or of the calibration reference template (3), carried out by the interferometric metrology instrument (2) through the inspection window (11) closed by the medium (110), and
- at least a second calibration measurement of the object, or of the calibration reference template (3), carried out by the interferometric metrology instrument (2) through the inspection window (11) without the medium (110);

• determine, based on the calibration measurements, refraction and phase shift compensation laws related to propagation through the medium (110) of the light emitted by the interferometric metrology instrument (2);
• operate the thermal chamber (1) to expose, to one or more predefined test temperatures, the object arranged inside the thermal chamber (1);
• operate the interferometric metrology instrument (2) to carry out, through the inspection window (11), optical measurements of the object exposed to the predefined test temperature or temperatures;
• correct the optical measurements based on the refraction and phase shift compensation laws to compensate for propagation through the medium (110) of the light emitted by the interferometric metrology instrument (2); and
• detect and measure thermo-elastic deformations of the object based on the corrected optical measurements.

**8.** The system of claim 7, wherein the interferometric metrology instrument is a laser radar (2) or a laser tracker.

**9.** The system according to claim 7 or 8, wherein the thermal chamber is a thermal vacuum chamber (1).

**10.** System for measuring thermo-elastic deformations of objects, including:

• an interferometric metrology instrument (2) configured to carry out optical measurements;
• a thermal chamber (1), whose internal temperature is controllable and which is fitted with an inspection window (11) closed by a medium (110) that is transparent to light emitted by the interferometric metrology instrument (2); and
• a control and processing unit connected to the interferometric metrology instrument (2) and the thermal chamber (1) to control operation thereof;

wherein the interferometric metrology instrument (2) is arranged outside the thermal chamber (1) in front of the inspection window (11), thereby being operable to carry out optical measurements through said inspection window (11);
and wherein the control and processing unit is configured to:

• operate the interferometric metrology instrument (2) to carry out calibration measurements of an object to be tested, or of a calibration reference template (3), arranged inside the thermal chamber (1), wherein the calibration measurements comprise

- at least a first calibration measurement of the object, or of the calibration reference template (3), carried out by the interferometric metrology instrument (2) through the inspection window (11) closed by the medium (110), and
- at least a second calibration measurement of the object, or of the calibration reference template (3), carried out by the interferometric metrology instrument (2) through the inspection window (11) without the medium (110); and

• determine, based on the calibration measurements, refraction and phase shift compensation laws related to propagation through the medium (110) of the light emitted by the interferometric metrology instrument (2);
• compute a set of object's points to be measured, wherein said set of object's points is computed based on a finite element model simulation of thermo-elastic behavior of the object;
• modify the computed set of object's points based on the refraction and phase shift compensation laws to compensate for propagation through the medium (110) of the light emitted by the interferometric metrology instrument (2) ;
• operate the thermal chamber (1) to expose, to one or more predefined test temperatures, the object arranged inside the thermal chamber (1);
• operate the interferometric metrology instrument (2) based on the modified set of object's points to carry out, through the inspection window (11), optical measurements of the object exposed to the predefined test temperature or temperatures; and
• detect and measure thermo-elastic deformations of the object based on the optical measurements carried out.

11. The system of claim 10, wherein the interferometric metrology instrument is a laser radar (2) or a laser tracker.

12. The system according to claim 10 or 11, wherein the thermal chamber is a thermal vacuum chamber (1).

13. Computer program product comprising software code portions loadable on a control and processing unit of a system for measuring thermo-elastic deformations of objects, wherein said system further includes:

• an interferometric metrology instrument (2) configured to carry out optical measurements; and
• a thermal chamber (1), whose internal temperature is controllable and which is fitted with an inspection window (11) closed by a medium (110) that is transparent to light emitted by the interferometric metrology instrument (2) ;

wherein the interferometric metrology instrument (2) is arranged outside the thermal chamber (1) in front of the inspection window (11), thereby being operable to carry out optical measurements through said inspection window (11);
wherein the control and processing unit is connected to the interferometric metrology instrument (2) and the thermal chamber (1) to control operation thereof; and wherein said software code portions are such that to cause, when loaded on the control and processing unit, said control and processing unit to become configured to:

• operate the interferometric metrology instrument (2) to carry out calibration measurements of an object to be tested, or of a calibration reference template (3), arranged inside the thermal chamber (1), wherein the calibration measurements comprise

- at least a first calibration measurement of the object, or of the calibration reference template (3), carried out by the interferometric metrology instrument (2) through the inspection window (11) closed by the medium (110), and
- at least a second calibration measurement of the object, or of the calibration reference template (3), carried out by the interferometric metrology instrument (2) through the inspection window (11) without the medium (110);

• determine, based on the calibration measurements, refraction and phase shift compensation laws related to propagation through the medium (110) of the light emitted by the interferometric metrology instrument (2);
• operate the thermal chamber (1) to expose, to one or more predefined test temperatures, the object arranged inside the thermal chamber (1);
• operate the interferometric metrology instrument (2) to carry out, through the inspection window (11), optical measurements of the object exposed to the predefined test temperature or temperatures;
• correct the optical measurements based on the refraction and phase shift compensation laws to compensate for propagation through the medium (110) of the light emitted by the interferometric metrology instrument (2); and
• detect and measure thermo-elastic deformations of the object based on the corrected optical measurements.

14. Computer program product comprising software code portions loadable on a control and processing unit of a system for measuring thermo-elastic deformations of objects, wherein said system further includes:

> • an interferometric metrology instrument (2) configured to carry out optical measurements; and
> • a thermal chamber (1), whose internal temperature is controllable and which is fitted with an inspection window (11) closed by a medium (110) that is transparent to light emitted by the interferometric metrology instrument (2) ;

wherein the interferometric metrology instrument (2) is arranged outside the thermal chamber (1) in front of the inspection window (11), thereby being operable to carry out optical measurements through said inspection window (11);
wherein the control and processing unit is connected to the interferometric metrology instrument (2) and the thermal chamber (1) to control operation thereof; and wherein said software code portions are such that to cause, when loaded on the control and processing unit, said control and processing unit to become configured to:

> • operate the interferometric metrology instrument (2) to carry out calibration measurements of an object to be tested, or of a calibration reference template (3), arranged inside the thermal chamber (1), wherein the calibration measurements comprise

> > - at least a first calibration measurement of the object, or of the calibration reference template (3), carried out by the interferometric metrology instrument (2) through the inspection window (11) closed by the medium (110), and
> > - at least a second calibration measurement of the object, or of the calibration reference template (3), carried out by the interferometric metrology instrument (2) through the inspection window (11) without the medium (110); and

> • determine, based on the calibration measurements, refraction and phase shift compensation laws related to propagation through the medium (110) of the light emitted by the interferometric metrology instrument (2);
• compute a set of object's points to be measured, wherein said set of object's points is computed based on a finite element model simulation of thermo-elastic behavior of the object;
• modify the computed set of object's points based on the refraction and phase shift compensation laws to compensate for propagation through the medium (110) of the light emitted by the interferometric metrology instrument (2) ;
• operate the thermal chamber (1) to expose, to one or more predefined test temperatures, the object arranged inside the thermal chamber (1);
• operate the interferometric metrology instrument (2) based on the modified set of object's points to carry out, through the inspection window (11), optical measurements of the object exposed to the predefined test temperature or temperatures; and
• detect and measure thermo-elastic deformations of the object based on the optical measurements carried out.

**Patentansprüche**

1. Verfahren zur Messung thermoelastischer Verformungen von Objekten, das die Bereitstellung umfasst von:

> • einem interferometrischen Messinstrument (2), das konfiguriert ist, um optische Messungen auszuführen; und
> • einer Wärmekammer (1), deren Innentemperatur steuerbar ist und die mit einem Sichtfenster (11) versehen ist, das von einem Medium (110) geschlossen ist, das für Licht, das von dem interferometrischen Messinstrument (2) emittiert wird, transparent ist;

wobei das interferometrische Messinstrument (2) außerhalb der Wärmekammer (1) vor dem Sichtfenster (11) angeordnet ist, wodurch es betriebsfähig ist, um optische Messungen durch das Sichtfenster (11) auszuführen;
wobei das Verfahren ferner umfasst:

> • Anordnen eines Objekts, das geprüft werden soll, im Inneren der Wärmekammer (1);
> • Betreiben der Wärmekammer (1), um das Objekt einer oder mehreren vordefinierten Prüftemperaturen auszusetzen;
> • Betreiben des interferometrischen Messinstruments (2), um durch das Sichtfenster (11) optische Messungen des Objekts, das der vordefinierten Prüftemperatur oder den Prüftemperaturen ausgesetzt wird, auszuführen;
> • Korrigieren der optischen Messungen, um die Ausbreitung des von dem interferometrischen Messinstrument (2) emittierten Lichts durch das Medium (110) zu kompensieren; und
• Erfassen und Messen thermoelastischer Verformungen des Objekts basierend auf den korrigierten optischen Messungen;

wobei das Verfahren durch einen vorläufigen Eichschritt gekennzeichnet ist, der umfasst:

    • Ausführen von Eichmessungen des Objekts oder einer Eichreferenzvorlage (3), das/die im Inneren der Wärmekammer (1) angeordnet ist, mittels des interferometrischen Messinstruments (2), wobei die Eichmessungen aufweisen:

        - wenigstens eine erste Eichmessung des Objekts oder der Eichreferenzvorlage (3), die von dem interferometrischen Messinstrument (2) durch das von dem Medium (110) geschlossene Sichtfenster (11) ausgeführt wird, und
        - wenigstens eine zweite Eichmessung des Objekts oder der Eichreferenzvorlage (3), die von dem interferometrischen Messinstrument (2) durch das Sichtfenster (11) ohne das Medium (110) ausgeführt wird; und

    • Bestimmen von Brechungs- und Phasenverschiebungskompensationsgesetzen, welche die Ausbreitung des von dem interferometrischen Messinstrument (2) emittierten Lichts durch das Medium (110) betreffen, basierend auf den Eichmessungen;

wobei die optischen Messungen basierend auf den Brechungs- und Phasenverschiebungskompensationsgesetzen korrigiert werden.

2. Verfahren nach Anspruch 1, wobei die optischen Messungen des Verfahrens in Form von Radius, Azimuth und Höhenlage ausgedrückt werden; und wobei der vorläufige Eichschritt ferner umfasst:

    • Bereitstellen

        - einer ersten vordefinierten mathematischen Funktion, welche die Brechungskompensation im Azimuth über Azimuth-Brechungskorrekturparameter betrifft,
        - einer zweiten vordefinierten mathematischen Funktion, welche die Brechungskompensation in der Höhenlage über Höhenlagen-Brechungskorrekturparameter betrifft, und
        - einer dritten vordefinierten mathematischen Funktion, welche die Phasenverschiebungskompensation über Phasenverschiebungskorrekturparameter betrifft;

    • Berechnen von Werten der Azimuth-Brechungskorrekturparameter, der Höhenlagen-Brechungskorrekturparameter und der Phasenverschiebungskorrekturparameter basierend auf den Eichmessungen und auf den ersten, zweiten und dritten vordefinierten mathematischen Funktionen; und
    • Anwenden der berechneten Werte der Azimuth-Brechungskorrekturparameter, der Höhenlagen-Brechungskorrekturparameter und der Phasenverschiebungskorrekturparameter in den ersten, zweiten und dritten vordefinierten mathematischen Funktionen, wodurch jeweils ein Azimuth-Brechungskompensationsgesetz, ein Höhenlagen-Brechungskompensationsgesetz und ein Phasenverschiebungskompensationsgesetz bestimmt werden.

3. Verfahren nach Anspruch 1 oder 2, wobei die Eichmessungen aufweisen:

    • mehrere erste Eichmessungen des Objekts oder der Eichreferenzvorlage (3), die von dem interferometrischen Messinstrument (2) durch das von dem Medium (110) geschlossene Sichtfenster (11) ausgeführt werden; und
    • mehrere zweite Eichmessungen des Objekts oder der Eichreferenzvorlage (3), die von dem interferometrischen Messinstrument (2) durch das Sichtfenster (11) ohne das Medium (110) ausgeführt werden.

4. Verfahren zum Messen thermoelastischer Verformungen von Objekten, das die Bereitstellung umfasst von:

    • einem interferometrischen Messinstrument (2), das konfiguriert ist, um optische Messungen auszuführen; und
    • einer Wärmekammer (1), deren Innentemperatur steuerbar ist und die mit einem Sichtfenster (11) versehen ist, das von einem Medium (110) geschlossen ist, das für Licht, das von dem interferometrischen Messinstrument (2) emittiert wird, transparent ist;

wobei das interferometrische Messinstrument (2) außerhalb der Wärmekammer (1) vor dem Sichtfenster (11) angeordnet ist, wodurch es betriebsfähig ist, um optische Messungen durch das Sichtfenster (11) auszuführen; wobei das Verfahren ferner einen vorläufigen Eichschritt umfasst, der aufweist:

    • Durchführen von Eichmessungen eines Objekts, das geprüft werden soll, oder einer Eichreferenzvorlage (3), das/die im Inneren der Wärmekammer (1) angeordnet ist, mittels des interferometrischen Messinstruments (2), wobei die Eichmessungen aufweisen:

- wenigstens eine erste Eichmessung des Objekts oder der Eichreferenzvorlage (3), die von dem interferometrischen Messinstrument (2) durch das von dem Medium (110) geschlossene Sichtfenster (11) ausgeführt wird, und
- wenigstens eine zweite Eichmessung des Objekts oder der Eichreferenzvorlage (3), die von dem interferometrischen Messinstrument (2) durch das Sichtfenster (11) ohne das Medium (110) ausgeführt wird; und

• Bestimmen von Brechungs- und Phasenverschiebungskompensationsgesetzen, welche die Ausbreitung des von dem interferometrischen Messinstrument (2) emittierten Lichts durch das Medium (110) betreffen, basierend auf den Eichmessungen;

wobei das Verfahren ferner umfasst:

• Berechnen eines Satzes von Objektpunkten, die gemessen werden sollen, wobei dieser Satz von Objektpunkten basierend auf einer Finite-Element-Modell-Simulation des thermoelastischen Verhaltens des Objekts berechnet wird;
• Modifizieren des berechneten Satzes von Objektpunkten basierend auf den Brechungs- und Phasenverschiebungskompensationsgesetzen, um die Ausbreitung des von dem interferometrischen Messinstrument (2) emittierten Lichts durch das Medium (110) zu kompensieren;
• Betreiben der Wärmekammer (1), um das im Inneren der Wärmekammer (1) angeordnete Objekt einer oder mehreren vordefinierten Prüftemperaturen auszusetzen;
• Betreiben des interferometrischen Messinstruments (2) basierend auf dem modifizierten Satz von Objektpunkten, um durch das Sichtfenster (11) optische Messungen des Objekts, das der vordefinierten Prüftemperatur oder Temperaturen ausgesetzt ist, durchzuführen; und
• Erfassen und Messen thermoelastischer Verformungen des Objekts basierend auf den ausgeführten optischen Messungen.

5. Verfahren nach Anspruch 4, wobei die optischen Messungen des Objekts in Form von Radius, Azimuth und Höhenlage ausgedrückt werden; und wobei der vorläufige Eichschritt ferner umfasst:

• Bereitstellen

- einer ersten vordefinierten mathematischen Funktion, welche die Brechungskompensation im Azimuth über Azimuth-Brechungskorrekturparameter betrifft,
- einer zweiten vordefinierten mathematischen Funktion, welche die Brechungskompensation in der Höhenlage über Höhenlagen-Brechungskorrekturparameter betrifft, und
- einer dritten vordefinierten mathematischen Funktion, welche die Phasenverschiebungskompensation über Phasenverschiebungskorrekturparameter betrifft;

• Berechnen von Werten der Azimuth-Brechungskorrekturparameter, der Höhenlagen-Brechungskorrekturparameter und der Phasenverschiebungskorrekturparameter basierend auf den Eichmessungen und auf den ersten, zweiten und dritten vordefinierten mathematischen Funktionen; und
• Anwenden der berechneten Werte der Azimuth-Brechungskorrekturparameter, der Höhenlagen-Brechungskorrekturparameter und der Phasenverschiebungskorrekturparameter in den ersten, zweiten und dritten vordefinierten mathematischen Funktionen, wodurch jeweils ein Azimuth-Brechungskompensationsgesetz, ein Höhenlagen-Brechungskompensationsgesetz und ein Phasenverschiebungskompensationsgesetz bestimmt werden.

6. Verfahren nach Anspruch 4 oder 5, wobei die Eichmessungen aufweisen:

• mehrere erste Eichmessungen des Objekts oder der Eichreferenzvorlage (3), die von dem interferometrischen Messinstrument (2) durch das von dem Medium (110) geschlossene Sichtfenster (11) ausgeführt werden; und
• mehrere zweite Eichmessungen des Objekts oder der Eichreferenzvorlage (3), die von dem interferometrischen Messinstrument (2) durch das Sichtfenster (11) ohne das Medium (110) ausgeführt werden.

7. System zum Messen thermoelastischer Verformungen von Objekten, das umfasst:

• ein interferometrisches Messinstrument (2), das konfiguriert ist, um optische Messungen auszuführen; und
• eine Wärmekammer (1), deren Innentemperatur steuerbar ist und die mit einem Sichtfenster (11) versehen ist, das von einem Medium (110) geschlossen ist, das für Licht, das von dem interferometrischen Messinstrument (2) emittiert wird, transparent ist; und
• eine Steuerungs- und Verarbeitungseinheit, die mit dem interferometrischen Messinstrument (2) und der Wärmekammer (1) verbunden ist, um deren Betrieb zu steuern;

wobei das interferometrische Messinstrument (2) außerhalb der Wärmekammer (1) vor dem Sichtfenster (11) angeordnet ist, wodurch es betriebsfähig ist, um optische Messungen durch das Sichtfenster (11) auszuführen;
und wobei die Steuerungs- und Verarbeitungseinheit konfiguriert ist, um:

• das interferometrische Messinstrument (2) zu betreiben, um Eichmessungen eines Objekts, das geprüft werden soll, oder einer Eichreferenzvorlage (3), das/die im Inneren der Wärmekammer (1) angeordnet ist, durchzuführen, wobei die Eichmessungen aufweisen:

- wenigstens eine erste Eichmessung des Objekts oder der Eichreferenzvorlage (3), die von dem interferometrischen Messinstrument (2) durch das von dem Medium (110) geschlossene Sichtfenster (11) ausgeführt wird, und
- wenigstens eine zweite Eichmessung des Objekts oder der Eichreferenzvorlage (3), die von dem interferometrischen Messinstrument (2) durch das Sichtfenster (11) ohne das Medium (110) ausgeführt wird;

• Bestimmen von Brechungs- und Phasenverschiebungskompensationsgesetzen, welche die Ausbreitung des von dem interferometrischen Messinstrument (2) emittierten Lichts durch das Medium (110) betreffen, basierend auf den Eichmessungen;
• Betreiben der Wärmekammer (1), um das im Inneren der Wärmekammer (1) angeordnete Objekt einer oder mehreren vordefinierten Prüftemperaturen auszusetzen;
• Betreiben des interferometrischen Messinstruments (2), um durch das Sichtfenster (11) optische Messungen des Objekts, das der vordefinierten Prüftemperatur oder den Prüftemperaturen ausgesetzt wird, auszuführen;
• Korrigieren der optischen Messungen basierend auf den Brechungs- und Phasenverschiebungskompensationsgesetzen, um die Ausbreitung des von dem interferometrischen Messinstrument (2) emittierten Lichts durch das Medium (110) zu kompensieren; und
• Erfassen und Messen thermoelastischer Verformungen des Objekts basierend auf den korrigierten optischen Messungen.

8. System nach Anspruch 7, wobei das interferometrische Messinstrument (2) ein Laserradar (2) oder ein Lasertracker ist.

9. System nach Anspruch 7 oder 8, wobei die Wärmekammer eine Vakuumwärmekammer (1) ist.

10. System zur Messung thermoelastischer Verformungen von Objekten, das umfasst:

• ein interferometrisches Messinstrument (2), das konfiguriert ist, um optische Messungen auszuführen; und
• eine Wärmekammer (1), deren Innentemperatur steuerbar ist und die mit einem Sichtfenster (11) versehen ist, das von einem Medium (110) geschlossen ist, das für Licht, das von dem interferometrischen Messinstrument (2) emittiert wird, transparent ist; und
• eine Steuerungs- und Verarbeitungseinheit, die mit dem interferometrischen Messinstrument (2) und der Wärmekammer (1) verbunden ist, um deren Betrieb zu steuern;

wobei das interferometrische Messinstrument (2) außerhalb der Wärmekammer (1) vor dem Sichtfenster (11) angeordnet ist, wodurch es betriebsfähig ist, um optische Messungen durch das Sichtfenster (11) auszuführen;

und wobei die Steuerungs- und Verarbeitungseinheit konfiguriert ist, um:

• das interferometrische Messinstrument (2) zu betreiben, um Eichmessungen eines Objekts, das geprüft werden soll, oder einer Eichreferenzvorlage (3), das/die im Inneren der Wärmekammer (1) angeordnet ist, durchzuführen, wobei die Eichmessungen aufweisen:

- wenigstens eine erste Eichmessung des Objekts oder der Eichreferenzvorlage (3), die von dem interferometrischen Messinstrument (2) durch das von dem Medium (110) geschlossene Sichtfenster (11) ausgeführt wird, und
- wenigstens eine zweite Eichmessung des Objekts oder der Eichreferenzvorlage (3), die von dem interferometrischen Messinstrument (2) durch das Sichtfenster (11) ohne das Medium (110) ausgeführt wird;

• Bestimmen von Brechungs- und Phasenverschiebungskompensationsgesetzen, welche die Ausbreitung des von dem interferometrischen Messinstrument (2) emittierten Lichts durch das Medium (110) betreffen, basierend auf den Eichmessungen;
• Berechnen eines Satzes von Objektpunkten, die gemessen werden sollen, wobei dieser Satz von Objektpunkten basierend auf einer Finite-Element-Modell-Simulation des thermoelastischen Verhaltens des Objekts berechnet wird;
• Modifizieren des berechneten Satzes von Objektpunkten basierend auf den Brechungs- und Phasenverschiebungskompensationsgesetzen, um die Ausbreitung des von dem interferometrischen Messinstrument (2) emittierten Lichts durch das Medium (110) zu kompensieren;
• Betreiben der Wärmekammer (1), um das im Inneren der Wärmekammer (1) angeordnete Objekt einer oder mehreren vordefinierten Prüftemperaturen auszusetzen;
• Betreiben des interferometrischen Messinstruments (2) basierend auf dem modifizierten Satz von Objektpunkten, um durch das Sichtfenster (11) optische Messungen des Objekts, das der vordefinierten Prüftemperatur oder Temperaturen ausgesetzt ist, durchzuführen; und
• Erfassen und Messen thermoelastischer Verformungen des Objekts basierend auf den ausgeführten optischen Messungen.

11. System nach Anspruch 10, wobei das interferometrische Messinstrument (2) ein Laserradar (2) oder ein Lasertracker ist.

12. System nach Anspruch 10 oder 11, wobei die Wärmekammer eine Vakuumwärmekammer (1) ist.

13. Computerprogrammprodukt, das Softwarekodeabschnitte aufweist, die auf eine Steuerungs- und Verarbeitungseinheit eines Systems zur Messung thermoelastischer Verformungen von Objekten ladbar sind, wobei das System ferner umfasst:

    • ein interferometrisches Messinstrument (2), das konfiguriert ist, um optische Messungen auszuführen; und
    • eine Wärmekammer (1), deren Innentemperatur steuerbar ist und die mit einem Sichtfenster (11) versehen ist, das von einem Medium (110) geschlossen ist, das für Licht, das von dem interferometrischen Messinstrument (2) emittiert wird, transparent ist;

wobei das interferometrische Messinstrument (2) außerhalb der Wärmekammer (1) vor dem Sichtfenster (11) angeordnet ist, wodurch es betriebsfähig ist, um optische Messungen durch das Sichtfenster (11) auszuführen;
wobei die Steuerungs- und Verarbeitungseinheit mit dem interferometrischen Messinstrument (2) und der Wärmekammer (1) verbunden ist, um deren Betrieb zu steuern;
und wobei die Softwarekodeabschnitte derart sind, dass sie, wenn sie auf die Steuerungs- und Verarbeitungseinheit geladen werden, bewirken, dass die Steuerungs- und Verarbeitungseinheit konfiguriert wird, um:

    • das interferometrische Messinstrument (2) zu betreiben, um Eichmessungen eines Objekts, das geprüft werden soll, oder einer Eichreferenzvorlage (3), das/die im Inneren der Wärmekammer (1) angeordnet ist, zu betreiben, wobei die Eichmessungen aufweisen:

        - wenigstens eine erste Eichmessung des Objekts oder der Eichreferenzvorlage (3), die von dem interferometrischen Messinstrument (2) durch das von dem Medium (110) geschlossene Sichtfenster (11) ausgeführt wird, und
        - wenigstens eine zweite Eichmessung des Objekts oder der Eichreferenzvorlage (3), die von dem interferometrischen Messinstrument (2) durch das Sichtfenster (11) ohne das Medium (110) ausgeführt wird;

    • basierend auf den Eichmessungen Brechungs- und Phasenverschiebungskompensationsgesetze zu bestimmen, welche die Ausbreitung des von dem interferometrischen Messinstrument (2) emittierten Lichts durch das Medium (110) betreffen;
    • die Wärmekammer (1) zu betreiben, um das im Inneren der Wärmekammer (1) angeordnete Objekt einer oder mehreren vordefinierten Prüftemperaturen auszusetzen;
    • das interferometrische Messinstrument (2) zu betreiben, um durch das Sichtfenster (11) optische Messungen des Objekts, das der vordefinierten Prüftemperatur oder den Prüftemperaturen ausgesetzt wird, auszuführen;
    • die optischen Messungen zu korrigieren, um die Ausbreitung des von dem interferometrischen Messinstrument (2) emittierten Lichts durch das Medium (110) zu kompensieren; und
    • thermoelastische Verformungen des Objekts basierend auf den korrigierten optischen Messungen zu erfassen und zu messen.

14. Computerprogrammprodukt, das Softwarekodeabschnitte aufweist, die auf eine Steuerungs- und Verarbeitungseinheit eines Systems zur Messung thermoelastischer Verformungen von Objekten ladbar sind, wobei das System ferner umfasst:

    • ein interferometrisches Messinstrument (2), das konfiguriert ist, um optische Messungen auszuführen; und
    • eine Wärmekammer (1), deren Innentemperatur steuerbar ist und die mit einem Sichtfenster (11) versehen ist, das von einem Medium (110) geschlossen ist, das für Licht, das von dem interferometrischen Messinstrument (2) emittiert wird, transparent ist;

wobei das interferometrische Messinstrument (2) außerhalb der Wärmekammer (1) vor dem Sichtfenster (11) angeordnet ist, wodurch es betriebsfähig ist, um optische Messungen durch das Sichtfenster (11) auszuführen;
wobei die Steuerungs- und Verarbeitungseinheit mit dem interferometrischen Messinstrument (2) und der Wärmekammer (1) verbunden ist, um deren Betrieb zu steuern;
und wobei die Softwarekodeabschnitte derart sind, dass sie, wenn sie auf die Steuerungs- und Verarbeitungseinheit geladen werden, bewirken, dass die Steuerungs- und Verarbeitungseinheit konfiguriert wird, um:

• das interferometrische Messinstrument (2) zu betreiben, um Eichmessungen eines Objekts, das geprüft werden soll, oder einer Eichreferenzvorlage (3), das/die im Inneren der Wärmekammer (1) angeordnet ist, zu betreiben, wobei die Eichmessungen aufweisen:

- wenigstens eine erste Eichmessung des Objekts oder der Eichreferenzvorlage (3), die von dem interferometrischen Messinstrument (2) durch das von dem Medium (110) geschlossene Sichtfenster (11) ausgeführt wird, und
- wenigstens eine zweite Eichmessung des Objekts oder der Eichreferenzvorlage (3), die von dem interferometrischen Messinstrument (2) durch das Sichtfenster (11) ohne das Medium (110) ausgeführt wird; und

• basierend auf den Eichmessungen Brechungs- und Phasenverschiebungskompensationsgesetze zu bestimmen, welche die Ausbreitung des von dem interferometrischen Messinstrument (2) emittierten Lichts durch das Medium (110) betreffen;
• einen Satz von Objektpunkten, die gemessen werden sollen, zu berechnen, wobei dieser Satz von Objektpunkten basierend auf einer Finite-Element-Modell-Simulation des thermoelastischen Verhaltens des Objekts berechnet wird;
• den berechneten Satz von Objektpunkten basierend auf den Brechungs- und Phasenverschiebungskompensationsgesetzen zu modifizieren, um die Ausbreitung des von dem interferometrischen Messinstrument (2) emittierten Lichts durch das Medium (110) zu kompensieren;
• die Wärmekammer (1) zu betreiben, um das im Inneren der Wärmekammer (1) angeordnete Objekt einer oder mehreren vordefinierten Prüftemperaturen auszusetzen;
• das interferometrische Messinstrument (2) basierend auf dem modifizierten Satz von Objektpunkten zu betreiben, um durch das Sichtfenster (11) optische Messungen des Objekts, das der vordefinierten Prüftemperatur oder Temperaturen ausgesetzt ist, durchzuführen; und
• thermoelastische Verformungen des Objekts basierend auf den ausgeführten optischen Messungen zu erfassen und zu messen.

## Revendications

1. Procédé de mesure de déformations thermoélastiques d'objets, comportant le fait de fournir :

• un instrument de métrologie interférométrique (2) configuré pour effectuer des mesures optiques ; et
• une chambre thermique (1), dont la température interne peut être régulée et qui est équipée d'une fenêtre d'inspection (11) fermée par un milieu (110) qui est transparent à la lumière émise par l'instrument de métrologie interférométrique (2) ;

dans lequel ledit instrument de métrologie interférométrique (2) est agencé à l'extérieur de la chambre thermique (1) devant la fenêtre d'inspection (11), pouvant ainsi fonctionner pour effectuer des mesures optiques à travers ladite fenêtre d'inspection (11) ;
le procédé comportant en outre le fait de :

• agencer un objet à tester à l'intérieur de la chambre thermique (1) ;
• faire fonctionner la chambre thermique (1) pour exposer l'objet à une ou plusieurs température(s) d'essai prédéfinie(s) ;
• faire fonctionner l'instrument de métrologie interférométrique (2) pour effectuer, à travers la fenêtre d'inspection (11), des mesures optiques de l'objet exposé à la ou aux température(s) d'essai prédéfinie(s) ;
• corriger les mesures optiques pour compenser la propagation à travers le milieu (110) de la lumière émise par l'instrument de métrologie interférométrique (2) ; et
• détecter et mesurer des déformations thermoélastiques de l'objet sur la base des mesures optiques corrigées ;

le procédé étant **caractérisé par** une étape d'étalonnage préliminaire comportant le fait de :

• effectuer, au moyen de l'instrument de métrologie interférométrique (2), des mesures d'étalonnage de l'objet, ou d'un gabarit de référence d'étalonnage (3), agencé à l'intérieur de la chambre thermique (1), dans lequel les mesures d'étalonnage comprennent

- au moins une première mesure d'étalonnage de l'objet, ou du gabarit de référence d'étalonnage (3), effectuée par l'instrument de métrologie interférométrique (2) à travers la fenêtre d'inspection (11) fermée par le milieu (110), et
- au moins une deuxième mesure d'étalonnage de l'objet, ou du gabarit de référence d'étalonnage (3), effectuée par l'instrument de métrologie interférométrique (2) à travers la fenêtre d'inspection (11) sans le milieu (110) ; et

• déterminer, sur la base des mesures d'étalonnage, des lois de compensation de réfraction et de déphasage liées à la propagation à travers le milieu (110) de la lumière émise par l'instrument de métrologie interférométrique (2) ;

dans lequel les mesures optiques sont corrigées sur la base des lois de compensation de réfraction et de déphasage.

**2.** Procédé selon la revendication 1, dans lequel les mesures optiques de l'objet sont exprimées en termes de rayon, d'azimut et d'élévation ; et dans lequel l'étape d'étalonnage préliminaire comporte en outre le fait de :

• fournir

- une première fonction mathématique prédéfinie liée à une compensation de réfraction en azimut via des paramètres de correction de réfraction en azimut,
- une deuxième fonction mathématique prédéfinie liée à une compensation de réfraction en élévation via des paramètres de correction de réfraction en élévation, et
- une troisième fonction mathématique prédéfinie liée à une compensation de déphasage via des paramètres de correction de déphasage ;

• calculer des valeurs des paramètres de correction de réfraction en azimut, des paramètres de correction de réfraction en élévation et des paramètres de correction de déphasage sur la base des mesures d'étalonnage et desdites première, deuxième et troisième fonctions mathématiques prédéfinies ; et

• appliquer les valeurs calculées des paramètres de correction de réfraction en azimut, des paramètres de correction de réfraction en élévation et des paramètres de correction de déphasage auxdites première, deuxième et troisième fonctions mathématiques prédéfinies, déterminant ainsi une loi de compensation de réfraction en azimut, une loi de compensation de réfraction en élévation et une loi de compensation de déphasage, respectivement.

**3.** Procédé selon la revendication 1 ou 2, dans lequel les mesures d'étalonnage comprennent :

• une pluralité de premières mesures d'étalonnage de l'objet, ou du gabarit de référence d'étalonnage (3), effectuées par l'instrument de métrologie interférométrique (2) à travers la fenêtre d'inspection (11) fermée par le milieu (110) ; et
• une pluralité de deuxièmes mesures d'étalonnage de l'objet, ou du gabarit de référence d'étalonnage (3), effectuées par l'instrument de métrologie interférométrique (2) à travers la fenêtre d'inspection (11) sans le milieu (110).

**4.** Procédé de mesure de déformations thermoélastiques d'objets, comportant le fait de fournir :

• un instrument de métrologie interférométrique (2) configuré pour effectuer des mesures optiques ; et
• une chambre thermique (1), dont la température interne peut être régulée et qui est équipée d'une fenêtre d'inspection (11) fermée par un milieu (110) qui est transparent à la lumière émise par l'instrument de métrologie interférométrique (2) ;

dans lequel ledit instrument de métrologie interférométrique (2) est agencé à l'extérieur de la chambre thermique (1) devant la fenêtre d'inspection (11), pouvant ainsi fonctionner pour effectuer des mesures optiques à travers ladite fenêtre d'inspection (11) ; le procédé comportant en outre une étape d'étalonnage préliminaire comprenant de :

• effectuer, au moyen de l'instrument de métrologie interférométrique (2), des mesures d'étalonnage d'un objet à tester, ou d'un gabarit de référence d'étalonnage (3) agencé à l'intérieur de la chambre thermique (1), dans lequel les mesures d'étalonnage comprennent

- au moins une première mesure d'étalonnage de l'objet, ou du gabarit de référence d'étalonnage (3), effectuée par l'instrument de métrologie interférométrique (2) à travers la fenêtre d'inspection (11) fermée par le milieu (110), et

- au moins une deuxième mesure d'étalonnage de l'objet, ou du gabarit de référence d'étalonnage (3), effectuée par l'instrument de métrologie interférométrique (2) à travers la fenêtre d'inspection (11) sans le milieu (110) ; et

• déterminer, sur la base des mesures d'étalonnage, des lois de compensation de réfraction et de déphasage liées à la propagation à travers le milieu (110) de la lumière émise par l'instrument de métrologie interférométrique (2) ;

le procédé comportant en outre le fait de :

• calculer un ensemble de points de l'objet à mesurer,

dans lequel ledit ensemble de points de l'objet est calculé sur la base d'une simulation de modèle par éléments finis d'un comportement thermoélastique de l'objet ;

• modifier l'ensemble de points de l'objet calculé sur la base des lois de compensation de réfraction et de déphasage pour compenser la propagation à travers le milieu (110) de la lumière émise par l'instrument de métrologie interférométrique (2) ;

• faire fonctionner la chambre thermique (1) pour exposer, à une ou plusieurs température(s) d'essai prédéfinie(s), l'objet agencé à l'intérieur de la chambre thermique (1) ;

• faire fonctionner l'instrument de métrologie interférométrique (2) sur la base de l'ensemble de points modifié de l'objet pour effectuer, à travers la fenêtre d'inspection (11), des mesures optiques de l'objet exposé à la ou aux température(s) d'essai prédéfinie(s) ; et

• détecter et mesurer des déformations thermoélastiques de l'objet sur la base des mesures optiques effectuées.

5. Procédé selon la revendication 4, dans lequel les mesures optiques de l'objet sont exprimées en termes de rayon, d'azimut et d'élévation ; et dans lequel l'étape d'étalonnage préliminaire comporte en outre le fait de :

• fournir

- une première fonction mathématique prédéfinie liée à une compensation de réfraction en azimut via des paramètres de correction de réfraction en azimut,
- une deuxième fonction mathématique prédéfinie liée à une compensation de réfraction en élévation via des paramètres de correction de réfraction en élévation, et

- une troisième fonction mathématique prédéfinie liée à une compensation de déphasage via des paramètres de correction de déphasage ;

• calculer des valeurs des paramètres de correction de réfraction en azimut, des paramètres de correction de réfraction en élévation et des paramètres de correction de déphasage sur la base des mesures d'étalonnage et desdites première, deuxième et troisième fonctions mathématiques prédéfinies ; et

• appliquer les valeurs calculées des paramètres de correction de réfraction en azimut, des paramètres de correction de réfraction en élévation et des paramètres de correction de déphasage auxdites première, deuxième et troisième fonctions mathématiques prédéfinies, déterminant ainsi une loi de compensation de réfraction en azimut, une loi de compensation de réfraction en élévation et une loi de compensation de déphasage, respectivement.

6. Procédé selon la revendication 4 ou 5, dans lequel les mesures d'étalonnage comprennent :

• une pluralité de premières mesures d'étalonnage de l'objet, ou du gabarit de référence d'étalonnage (3), effectuées par l'instrument de métrologie interférométrique (2) à travers la fenêtre d'inspection (11) fermée par le milieu (110) ; et

• une pluralité de deuxièmes mesures d'étalonnage de l'objet, ou du gabarit de référence d'étalonnage (3), effectuées par l'instrument de métrologie interférométrique (2) à travers la fenêtre d'inspection (11) sans le milieu (110).

7. Système pour mesurer des déformations thermoélastiques d'objets, comportant :

• un instrument de métrologie interférométrique (2) configuré pour effectuer des mesures optiques ;

• une chambre thermique (1), dont la température interne peut être régulée et qui est équipée d'une fenêtre d'inspection (11) fermée par un milieu (110) qui est transparent à la lumière émise par l'instrument de métrologie interférométrique (2) ; et

• une unité de commande et de traitement connectée à l'instrument de métrologie interférométrique (2) et à la chambre thermique (1) pour en commander le fonctionnement ;

dans lequel l'instrument de métrologie interférométrique (2) est agencé à l'extérieur de la chambre thermique (1) devant la fenêtre d'inspection (11), pouvant ainsi fonctionner pour effectuer des mesures optiques à travers ladite fenêtre d'inspection (11) ; et dans lequel l'unité de commande et de traitement est configurée pour :

• faire fonctionner l'instrument de métrologie interférométrique (2) pour effectuer des mesures d'étalonnage d'un objet à tester, ou d'un gabarit de référence d'étalonnage (3), agencé à l'intérieur de la chambre thermique (1), dans lequel les mesures d'étalonnage comprennent

- au moins une première mesure d'étalonnage de l'objet, ou du gabarit de référence d'étalonnage (3), effectuée par l'instrument de métrologie interférométrique (2) à travers la fenêtre d'inspection (11) fermée par le milieu (110), et
- au moins une deuxième mesure d'étalonnage de l'objet, ou du gabarit de référence d'étalonnage (3), effectuée par l'instrument de métrologie interférométrique (2) à travers la fenêtre d'inspection (11) sans le milieu (110) ;

• déterminer, sur la base des mesures d'étalonnage, des lois de compensation de réfraction et de déphasage liées à la propagation à travers le milieu (110) de la lumière émise par l'instrument de métrologie interférométrique (2) ;
• faire fonctionner la chambre thermique (1) pour exposer, à une ou plusieurs température(s) d'essai prédéfinie(s), l'objet agencé à l'intérieur de la chambre thermique (1) ;
• faire fonctionner l'instrument de métrologie interférométrique (2) pour effectuer, à travers la fenêtre d'inspection (11), des mesures optiques de l'objet exposé à la ou aux température(s) d'essai prédéfinie(s)
• corriger les mesures optiques sur la base des lois de compensation de réfraction et de déphasage pour compenser la propagation à travers le milieu (110) de la lumière émise par l'instrument de métrologie interférométrique (2) ; et
• détecter et mesurer des déformations thermoélastiques de l'objet sur la base des mesures optiques corrigées.

8. Système selon la revendication 7, dans lequel l'instrument de métrologie interférométrique est un radar laser (2) ou un laser de poursuite.

9. Système selon la revendication 7 ou 8, dans lequel la chambre thermique est une chambre thermique (1) à vide.

10. Système pour mesurer des déformations thermoélastiques d'objets, comportant :

• un instrument de métrologie interférométrique (2) configuré pour effectuer des mesures optiques ;
• une chambre thermique (1), dont la température interne peut être régulée et qui est équipée d'une fenêtre d'inspection (11) fermée par un milieu (110) qui est transparent à la lumière émise par l'instrument de métrologie interférométrique (2) ; et
• une unité de commande et de traitement connectée à l'instrument de métrologie interférométrique (2) et à la chambre thermique (1) pour en commander le fonctionnement ;

dans lequel l'instrument de métrologie interférométrique (2) est agencé à l'extérieur de la chambre thermique (1) devant la fenêtre d'inspection (11), pouvant ainsi fonctionner pour effectuer des mesures optiques à travers ladite fenêtre d'inspection (11) ; et dans lequel l'unité de commande et de traitement est configurée pour :

• faire fonctionner l'instrument de métrologie interférométrique (2) pour effectuer des mesures d'étalonnage d'un objet à tester ou d'un gabarit de référence d'étalonnage (3) agencé à l'intérieur de la chambre thermique (1), dans lequel les mesures d'étalonnage comprennent

- au moins une première mesure d'étalonnage de l'objet, ou du gabarit de référence d'étalonnage (3), effectuée par l'instrument de métrologie interférométrique (2) à travers la fenêtre d'inspection (11) fermée par le milieu (110), et
- au moins une deuxième mesure d'étalonnage de l'objet, ou du gabarit de référence d'étalonnage (3), effectuée par l'instrument de métrologie interférométrique (2) à travers la fenêtre d'inspection (11) sans le milieu (110) ; et

• déterminer, sur la base des mesures d'étalonnage, des lois de compensation de réfraction et de déphasage liées à la propagation à travers le milieu (110) de la lumière émise par l'instrument de métrologie interférométrique (2) ;
• calculer un ensemble de points de l'objet à mesurer, dans lequel ledit ensemble de points de l'objet est calculé sur la base d'une simulation de modèle par éléments finis d'un comportement thermoélastique de l'objet ;
• modifier l'ensemble de points calculé de l'objet sur la base des lois de compensation de réfraction et de déphasage pour compenser la propagation à travers le milieu (110) de la lumière émise par l'instrument de métrologie interférométrique (2) ;

• faire fonctionner la chambre thermique (1) pour exposer, à une ou plusieurs température(s) d'essai prédéfinie(s), l'objet agencé à l'intérieur de la chambre thermique (1) ;
• faire fonctionner l'instrument de métrologie interférométrique (2) sur la base de l'ensemble de points modifié de l'objet pour effectuer, à travers la fenêtre d'inspection (11), des mesures optiques de l'objet exposé à la ou aux température(s) d'essai prédéfinie(s) ; et
• détecter et mesurer des déformations thermoélastiques de l'objet sur la base des mesures optiques effectuées.

11. Système selon la revendication 10, dans lequel l'instrument de métrologie interférométrique est un radar laser (2) ou un laser de poursuite.

12. Système selon la revendication 10 ou 11, dans lequel la chambre thermique est une chambre thermique (1) à vide.

13. Produit programme d'ordinateur comprenant des parties de code logiciel pouvant être chargées sur une unité de commande et de traitement d'un système pour mesurer des déformations thermoélastiques d'objets, dans lequel ledit système comporte en outre :

   • un instrument de métrologie interférométrique (2) configuré pour effectuer des mesures optiques ; et
   • une chambre thermique (1), dont la température interne peut être régulée et qui est équipée d'une fenêtre d'inspection (11) fermée par un milieu (110) qui est transparent à la lumière émise par l'instrument de métrologie interférométrique (2) ;

dans lequel l'instrument de métrologie interférométrique (2) est agencé à l'extérieur de la chambre thermique (1) devant la fenêtre d'inspection (11), pouvant ainsi fonctionner pour effectuer des mesures optiques à travers ladite fenêtre d'inspection (11) ;
dans lequel l'unité de commande et de traitement est connectée à l'instrument de métrologie interférométrique (2) et à la chambre thermique (1) pour en commander le fonctionnement ;
et dans lequel lesdites parties de code logiciel sont telles qu'elles amènent, lorsqu'elles sont chargées sur l'unité de commande et de traitement, ladite unité de commande et de traitement à devenir configurée pour :

   • faire fonctionner l'instrument de métrologie interférométrique (2) pour effectuer des mesures d'étalonnage d'un objet à tester ou d'un gabarit de référence d'étalonnage (3) agencé à l'intérieur de la chambre thermique (1), dans lequel les mesures d'étalonnage comprennent

   - au moins une première mesure d'étalonnage de l'objet, ou du gabarit de référence d'étalonnage (3), effectuée par l'instrument de métrologie interférométrique (2) à travers la fenêtre d'inspection (11) fermée par le milieu (110), et
   - au moins une deuxième mesure d'étalonnage de l'objet, ou du gabarit de référence d'étalonnage (3), effectuée par l'instrument de métrologie interférométrique (2) à travers la fenêtre d'inspection (11) sans le milieu (110) ;

   • déterminer, sur la base des mesures d'étalonnage, des lois de compensation de réfraction et de déphasage liées à la propagation à travers le milieu (110) de la lumière émise par l'instrument de métrologie interférométrique (2) ;
   • faire fonctionner la chambre thermique (1) pour exposer, à une ou plusieurs température(s) d'essai prédéfinie(s), l'objet agencé à l'intérieur de la chambre thermique (1) ;
   • faire fonctionner l'instrument de métrologie interférométrique (2) pour effectuer, à travers la fenêtre d'inspection (11), des mesures optiques de l'objet exposé à la ou aux température(s) d'essai prédéfinie(s);
   • corriger les mesures optiques sur la base des lois de compensation de réfraction et de déphasage pour compenser la propagation à travers le milieu (110) de la lumière émise par l'instrument de métrologie interférométrique (2) ; et
   • détecter et mesurer des déformations thermoélastiques de l'objet sur la base des mesures optiques corrigées.

14. Produit programme d'ordinateur comprenant des parties de code logiciel pouvant être chargées sur une unité de commande et de traitement d'un système pour mesurer des déformations thermoélastiques d'objets, dans lequel ledit système comporte en outre :

   • un instrument de métrologie interférométrique (2) configuré pour effectuer des mesures optiques ; et
   • une chambre thermique (1), dont la température interne peut être régulée et qui est équipée d'une fenêtre d'inspection (11) fermée par un milieu (110) qui est transparent à la lumière émise par l'instrument de métrologie interférométrique (2) ;

dans lequel l'instrument de métrologie interférométrique (2) est agencé à l'extérieur de la chambre thermique (1) devant la fenêtre d'inspection (11), pouvant ainsi fonctionner pour effectuer des mesures optiques à travers ladite fenêtre d'inspection (11) ;
dans lequel l'unité de commande et de traitement est connectée à l'instrument de métrologie interférométrique (2) et à la chambre thermique (1) pour en commander le fonctionnement ;
et dans lequel lesdites parties de code logiciel sont telles qu'elles amènent, lorsqu'elles sont chargées sur l'unité de commande et de traitement, ladite unité de commande et de traitement à devenir configurée pour :

• faire fonctionner l'instrument de métrologie interférométrique (2) pour effectuer des mesures d'étalonnage d'un objet à tester ou d'un gabarit de référence d'étalonnage (3) agencé à l'intérieur de la chambre thermique (1), dans lequel les mesures d'étalonnage comprennent

- au moins une première mesure d'étalonnage de l'objet, ou du gabarit de référence d'étalonnage (3), effectuée par l'instrument de métrologie interférométrique (2) à travers la fenêtre d'inspection (11) fermée par le milieu (110), et
- au moins une deuxième mesure d'étalonnage de l'objet, ou du gabarit de référence d'étalonnage (3), effectuée par l'instrument de métrologie interférométrique (2) à travers la fenêtre d'inspection (11) sans le milieu (110) ; et

• déterminer, sur la base des mesures d'étalonnage, des lois de compensation de réfraction et de déphasage liées à la propagation à travers le milieu (110) de la lumière émise par l'instrument de métrologie interférométrique (2) ;
• calculer un ensemble de points de l'objet à mesurer, dans lequel ledit ensemble de points de l'objet est calculé sur la base d'une simulation de modèle par éléments finis d'un comportement thermoélastique de l'objet ;
• modifier l'ensemble de points calculé de l'objet sur la base des lois de compensation de réfraction et de déphasage pour compenser la propagation à travers le milieu (110) de la lumière émise par l'instrument de métrologie interférométrique (2) ;
• faire fonctionner la chambre thermique (1) pour exposer, à une ou plusieurs température(s) d'essai prédéfinie(s), l'objet agencé à l'intérieur de la chambre thermique (1) ;
• faire fonctionner l'instrument de métrologie interférométrique (2) sur la base de l'ensemble de points modifié de l'objet pour effectuer, à travers la fenêtre d'inspection (11), des mesures optiques de l'objet exposé à la ou aux température(s) d'essai prédéfinie(s) ; et
• détecter et mesurer des déformations thermoélastiques de l'objet sur la base des mesures optiques effectuées.

FIG. 1

FIG. 2

FIG. 3

FIG. 4

FIG. 5

FIG. 6

FIG. 7

FIG. 8

**EP 3 698 101 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9109898 B2

- KR 100808274 B1

**Non-patent literature cited in the description**

- **ZHANG Y. et al.** Patterned bilayer plate microstructures subjected to thermal loading: Deformation and stresses. *International Journal of Solids and Structures,* 01 January 2009, vol. 46 (1), 125-134